(19) Europäisches Patentamt
European Patent Office
Office européen des brevets

(11)   **EP 1 904 806 B2**

(12)   **NOUVEAU FASCICULE DE BREVET EUROPEEN**
Après la procédure d'opposition

(45) Date de publication et mention de la décision concernant l'opposition:
**16.11.2016   Bulletin 2016/46**

(45) Mention de la délivrance du brevet:
**06.03.2013   Bulletin 2013/10**

(21) Numéro de dépôt: **06778772.1**

(22) Date de dépôt: **05.07.2006**

(51) Int Cl.:
*G01D 5/20* (2006.01)      *G01D 5/22* (2006.01)
*G01B 7/14* (2006.01)

(86) Numéro de dépôt international:
**PCT/FR2006/001591**

(87) Numéro de publication internationale:
**WO 2007/006910 (18.01.2007 Gazette 2007/03)**

(54) **PROCÉDÉ DE MESURE SANS CONTACT D'UN DÉPLACEMENT RELATIF OU D'UN POSITIONNEMENT RELATIF D'UN PREMIER OBJET PAR RAPPORT A UN SECOND OBJET, PAR VOIE INDUCTIVE**

INDUKTIVE KONTAKTLOSE MESSUNG EINER RELATIVBEWEGUNG ODER RELATIVEN POSITIONIERUNG EINES ERSTEN OBJEKTS RELATIV ZU EINEM ZWEITEN OBJEKT

INDUCTIVE NON-CONTACT MEASUREMENT OF A RELATIVE MOVEMENT OR RELATIVE POSITIONING OF A FIRST OBJECT RELATIVE TO A SECOND OBJECT

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK RS**

(30) Priorité:  **07.07.2005   FR 0507270**

(43) Date de publication de la demande:
**02.04.2008   Bulletin 2008/14**

(73) Titulaire: **Nanotec Solution**
**30900 Nîmes (FR)**

(72) Inventeur: **ROZIERE, Didier**
**F-30900 Nîmes (FR)**

(74) Mandataire: **Pontet Allano & Associes**
**Parc Les Algorithmes, Bâtiment Platon**
**CS 70003 Saint-Aubin**
**91192 Gif-sur-Yvette Cedex (FR)**

(56) Documents cités:
**WO-A-2004/020953      DE-A1- 19 918 404**
**FR-A- 1 512 207      US-A- 4 816 759**
**US-A- 5 617 023      US-A1- 2004 075 428**
**US-A1- 2010 181 995      US-B1- 6 534 970**

EP 1 904 806 B2

## Description

La présente invention concerne un procédé de mesure sans contact d'un déplacement relatif ou d'un positionnement relatif d'un premier objet par rapport à un second objet, par voie inductive. Elle vise également un système de mesure sans contact mettant en oeuvre un tel procédé, ainsi que l'application de ce procédé au contrôle de position et d'alignement, notamment de miroirs segmentés de télescope.

Le domaine principal mais non limitatif d'application de la présente invention est celui des télescopes géants à miroirs segmentés dans lesquels il est nécessaire de contrôler les dispositifs de Tip, de Tilt, et de piston des miroirs segmentés avec une grande résolution, ainsi que le rayon de courbure global du miroir désigné sous le terme de GROC.

La publication « Segmented Mirror Control System Hardware for CELT » de Terry S.Mast et Jerry E. Nelson parue dans les actes de SPIE 2000 divulgue ainsi un système de commande de miroirs segmentés utilisant des capteurs capacitifs de déplacement pour le contrôle tridimensionnel des segments de miroir.

On connaît également une utilisation de capteurs de bord (« edge sensors ») de technologie capacitive disposés sur les parois latérales de segments de miroirs. Le document WO 2004/020953 décrit de tels capteurs dans un système de mesure sans contact d'un positionnement relatif de deux objets adjacents. Ce système met en oeuvre un calcul de type (CA-CB)/(CA+CB), lorsque CA et CB représentent des capacités constituées par deux électrodes émettrices et deux électrodes réceptrices en situation de désalignement relatif. Cette technologie capacitive est très performante sur le plan métrologique mais peut posséder une sensibilité à la présence de poussière et de condensation. Pour des miroirs de télescope géant dont le diamètre ne dépasse pas 10 m, il est encore possible de limiter le risque de présence de poussière et de condensation. Mais, pour des télescopes de diamètre pouvant atteindre 100 m ("Extra Large Telescope"), la présence de poussière et de condensation sur les capteurs est inévitable. Dans ces conditions la technologie capacitive risque de ne pas répondre convenablement aux spécifications métrologiques nécessaires pour contrôler la position des miroirs segmentés.

La technologie inductive présente l'avantage de ne pas être sensible à ce type de pollution. On connaît le document US 48 16 759 décrivant des capteurs inductifs pour mesurer le déplacement relatif de deux miroirs. Des bobines émettrices sont disposées sur le premier miroir. Des bobines réceptrices sont disposées sur le second miroir. La mesure est basée sur le principe de la mesure d'une impédance par courant de Foucault ("eddy current" en langue anglaise). La technique à courant de Foucault est très répandue dans les domaines industriels et laboratoire. Dans ce document US 48 16 759, on utilise deux bobines émettrices excitées par un signal alternatif visant deux bobines réceptrices. Ces dernières sont connectées sur une impédance nulle afin de se comporter comme une cible conductrice. Des courants de Foucault sont générés et, d'après la loi de Lenz, ces courants s'opposent à la cause qui leur a donné naissance. L'induction créée sur les deux bobines émettrices modifie la réluctance de ces bobines. Dans ces conditions l'impédance des bobines émettrices varie avec la distance séparant les bobines émettrices des bobines réceptrices et la différence d'impédance des deux bobines émettrices est sensible au taux de recouvrement des bobines, c'est-à-dire à la position radiale (vertical en Z) entre émetteur et récepteur. La différence d'impédance permet de mesurer la position radiale pour déterminer les Tip-Tilt et Piston.

L'un des inconvénients de ce concept est que la mesure s'effectue en mesurant une impédance d'une bobine au travers d'un câble et qu'il est impossible d'obtenir une bonne stabilité de mesure de position avec la température et dans le temps car toutes les impédances parasites se superposent à la réluctance à mesurer. Les principaux paramètres parasites sont la résistivité des bobines émettrices et réceptrices, la perméabilité des matériaux, l'impédance des câbles de liaison.

On connaît aussi le document US 2004 / 0 075 428 qui décrit un premier circuit mobile de façon coulissante à l'intérieur d'un second circuit. Le second circuit est fixe et génère un signal permettant de mesurer le déplacement relatif du premier circuit par rapport au deuxième selon la direction de coulissement.

Les documents FR1512207 et DE 199118404 décrivent également des capteurs de type inductif.

La présente invention a pour but de remédier aux inconvénients de l'art antérieur en proposant un nouveau système inductif de mesure sans contact de déplacement relatif entre deux objets adjacents.

Un autre but de l'invention est de concevoir un système de mesure insensible à la pollution liée à la poussière et la condensation.

La présente invention a encore pour but un système de mesure de grande précision.

On atteint au moins l'un des objectifs précités avec un procédé de mesure sans contact d'un déplacement relatif ou d'un positionnement relatif d'un premier objet par rapport à un second objet selon la revendication 1.

Le signal électrique alternatif de sortie peut être un courant alternatif circulant sur une charge de la bobine réceptrice, ou une tension alternative.

Par bobine ("coil" en langue anglaise), on entend tout circuit apte à émettre et/ou capter ou recevoir un champ électromagnétique.

La tension générée aux bornes de la bobine réceptrice est proportionnelle à la mutuelle inductance qui est fonction de la distance entre la bobine émettrice et la bobine réceptrice.

Avec le procédé selon l'invention, on utilise la mutuelle inductance entre les bobines émettrices et réceptrices. On mesure les tensions générées par les bobines réceptrices par effet transformateur. A l'opposé, dans l'art antérieur, notamment dans le document US 48 16 759, on mesure la phase du signal d'excitation appliqué aux bobines émettrices. Dans l'art antérieur, la mesure se fait du côté émetteur, et le récepteur se termine par une impédance nulle. Au contraire, dans la présente invention, on détecte la tension aux bornes du récepteur, donc avec une impédance quasi infinie.

En d'autres termes, le capteur est constitué d'un émetteur et d'un récepteur montés face à face pour mesurer la position axiale en "y" (entrefer ou gap pour calculer le "GRoC") et radiale en "z" pour mesurer les Tip-Tilt et Piston. Le concept est basé sur le principe de la mutuelle inductance entre deux bobines placées face à face. La bobine émettrice est excitée par une tension ou un courant alternatif et au travers de l'air, induit un champ dans la bobine réceptrice. Une tension électrique alternative apparaît aux bornes de la bobine réceptrice proportionnelle à la mutuelle inductance. Cette mutuelle est liée à la distance absolue séparant les deux bobines et à leur taux de recouvrement de surface. Dans ces conditions, le phénomène est proche du phénomène capacitif décrit dans le document WO 2004/020953. Le signal de sortie est très peut sensible aux impédances parasites constituant le capteur car la mesure est similaire à celle d'un transformateur dont le circuit magnétique est l'air. En effet, dans la présente invention, ladite au moins une bobine émettrice et ladite au moins une bobine réceptrice constituent un transformateur. Idéalement, il s'agit d'un transformateur sans noyau.

Suivant un mode de réalisation particulier de l'invention, on utilise au moins deux bobines réceptrices générant respectivement une tension alternative va proportionnelle à la mutuelle inductance Ma entre une première bobine réceptrice et ladite au moins une bobine émettrice, et une tension alternative vb proportionnelle à la mutuelle inductance Mb entre une seconde bobine réceptrice et ladite au moins une bobine émettrice.

Par axial on entend l'écartement entre les deux objets, et par radial le désalignement entre les deux objets.

En référence notamment au document WO 2004/020953, en remplaçant les électrodes capacitives par des bobines et les capacités créées par des mutuelles inductances "M", on montre que la position axiale est liée à la formule $1/(Ma+Mb)$ et la position radiale par $(Ma-Mb)/(Ma+Mb)$.

Ainsi, selon l'invention, on détermine un déplacement radial par mesure d'une tension continue radiale Vr proportionnelle à la relation $(Ma-Mb).f(Ma+Mb)$; $(Ma-Mb)$ étant la différence des mutuelles inductances Ma et Mb, $f(Ma+Mb)$ étant une fonction monotone, telle que la fonction inverse, de la somme $(Ma+Mb)$ des mutuelles inductances Ma et Mb; Ma étant la mutuelle inductance entre la bobine émettrice et une première bobine réceptrice, Mb étant la mutuelle inductance entre la bobine émettrice et une seconde bobine réceptrice. Par ailleurs, on détermine un déplacement axial par mesure d'une tension continue axiale Va proportionnelle à une fonction monotone, telle que la fonction inverse, de la somme des mutuelles inductances Ma et Mb. Les calculs peuvent être réalisés par électronique à l'aide d'opérateurs analogiques tels que des multiplieurs soit en asservissant l'excitation, soit en asservissant les signaux prélevés à la réception. Dans l'asservissement de l'excitation, l'amplitude du signal d'excitation de la bobine émettrice peut être asservie à la tension continue axiale Va. Autrement, dans l'asservissement des signaux à la réception, on peut maintenir l'amplitude du signal d'excitation constante, et pour mesurer le déplacement relatif, des moyens de calcul de la tension continue Va sont asservis à cette tension continue axiale Va.

Selon un mode de réalisation particulier de l'invention, on utilise deux bobines émettrices et au moins une bobine réceptrice. Pour une position donnée des bobines, on détermine en sortie de la bobine réceptrice une tension d'équilibrage d'inductance, et on asservit le positionnement radial des deux objets à ladite tension d'équilibrage. De préférence, cette tension d'équilibrage est nulle et on excite les deux bobines par deux signaux d'excitation opposés. Ce mode permet de réaliser un contrôle de positionnement radial : on étalonne le dispositif émetteur-récepteur pour un positionnement donné, puis chaque désalignement est détecté et résorbé par un réalignement d'un objet par rapport à l'autre.

De préférence, ladite au moins une bobine émettrice est disposée face aux bobines réceptrices. En particulier, la surface globale présentée par les bobines émettrices est inférieure à la surface globale présentée par les bobines réceptrices.

Selon l'invention, la bobine émettrice et les bobines réceptrices peuvent être des bobines différentielles. Elles peuvent présenter une forme rectangulaire, carrée, circulaire ou autre, et être de type plate ou planaire.

On peut les réaliser sous forme de spires déposées directement sur les objets. On peut aussi réaliser les bobines sous forme de spires déposées sur des circuits flexibles ou rigides, ces circuits étant disposés sur les objets ou miroirs. Plus précisément, ces circuits flexibles sont des circuits imprimés flexibles dont une face comporte des spires métalliques comme du cuivre, en spirale notamment. Pour améliorer la stabilité dimensionnelle des bobines, on peut coller directement la face côté spires sur le côté des miroirs. Le très faible coefficient de dilatation thermique des miroirs réduit fortement la déformation des circuits flexibles.

Selon un mode de réalisation, les bobines sont déposées sur un matériau présentant un très faible coefficient de dilation thermique afin de réduire fortement la déformation de ces bobines déposées. A titre d'exemple non limitatif, on peut avantageusement déposer les pistes conductrices d'électricité constituant les bobines directement sur un support stable tel que le support zerodur® qui présente un coefficient de dilatation thermique inférieur à 0,1 ppm/°C. Par contre, le coefficient de dilatation thermique d'un circuit imprimé flexible en polyimide est d'environ 20 ppm/°C et celui du cuivre (métal constituant les spires d'une bobine) environ 18ppm/°C. Il est possible de réduire d'un facteur d'environ dix ce coefficient de dilatation thermique d'un circuit imprimé flexible en polyimide si on colle ce circuit directement sur un support en zerodur®.

Selon une caractéristique de l'invention, le signal d'excitation alternatif est une tension alternative ou un courant alternatif, ce dernier permettant notamment de s'affranchir de perturbations dues à des résistances parasites.

En particulier, les bobines émettrice et réceptrice sont respectivement disposées sur deux faces latérales adjacentes de deux miroirs d'un télescope.

Suivant un autre aspect de l'invention, il est proposé un système de mesure de déplacement relatif ou d'un positionnement relatif d'un premier objet par rapport à un second objet, mettant en oeuvre un procédé tel que décrit précédemment. Ce système comprend les caractéristiques de la revendication 22.

Selon un mode de réalisation, le système peut comprendre une bobine émettrice et une bobine réceptrice pour mesurer un déplacement axial des objets par détermination d'une tension axiale Va proportionnelle à une fonction monotone, telle que la fonction inverse, de la mutuelle inductance entre les deux bobines.

Selon un autre mode de réalisation, le système peut comprendre deux bobines émettrices alimentées par deux signaux d'excitation opposés de façon à réaliser du contrôle de positionnement radial. On peut aussi réaliser une mesure de positionnement radial.

Selon un autre mode de réalisation, l'émetteur du capteur inductif réalisé peut comprendre deux bobines émettrices alimentées en série par un même courant alternatif afin d'obtenir un maximum de linéarité et de stabilité. Et le récepteur peut être constitué de deux bobines dont le montage en série donne la somme des deux mutuelles inductances et le montage en différentiel donne la différence des deux mutuelles inductances.

L'électronique ou moyens de traitement pour calculer des tensions représentatives des déplacements radial et axial peut être réalisé de différentes manières.

Selon une caractéristique avantageuse de l'invention, les moyens de traitement comprennent des moyens de calcul pour déterminer une tension continue Vr représentant un déplacement radial, Vr étant proportionnelle à la relation (Ma-Mb).f(Ma+Mb); (Ma-Mb) étant la différence des mutuelles inductances Ma et Mb, f(Ma+Mb) étant une fonction monotone, telle que la fonction inverse, de la somme (Ma+Mb) des mutuelles inductances Ma et Mb. Dans ce cas, les moyens de calcul peuvent comprendre :

- un sommateur pour sommer la différence des tensions alternatives va-vb des deux bobines réceptrices avec un signal de contre-réaction,
- un démodulateur pour démoduler le signal issu dudit sommateur,

- un intégrateur pour générer la tension continue radiale Vr à partir du signal issu du démodulateur, et
- un multiplieur alimenté par la tension continue radiale Vr et une tension de référence Vref pour générer ledit signal de contre-réaction; le déplacement relatif étant fonction de la valeur de la tension continue radiale Vr pour laquelle la sortie dudit sommateur est nulle.

De manière plus précise, l'intégrateur peut être remplacé par un correcteur de type Proportionnelle-Intégrale-Dérivée, dit PID.

Autrement, toujours pour déterminer la tension continue Vr, les moyens de calcul peuvent comprendre :

- un multiplieur-sommateur pour sommer la différence va-vb des tensions générées par les bobines réceptrices avec un signal de contre réaction multiplié par la somme va+vb des tensions générées par les bobines réceptrices,
- un démodulateur pour démoduler le signal issu dudit multiplieur, et
- un intégrateur pour générer la tension continue radiale Vr à partir du signal issu du démodulateur, ledit signal de contre réaction étant la tension continue radiale Vr; le déplacement relatif étant fonction de la valeur de la tension continue radiale Vr pour laquelle la sortie dudit multiplieur est nulle.

De même, les moyens de traitement comprennent des moyens de calcul pour déterminer une tension continue axiale Va représentant un déplacement axial et qui est proportionnelle à une fonction monotone, telle que la fonction inverse, de la somme des mutuelles inductances Ma et Mb. Dans ce cas, pour calculer la tension continue Va et réaliser un asservissement sur le signal d'excitation, les moyens de calcul peuvent comprendre:

- un sommateur pour sommer la somme des tensions alternatives va+vb des deux bobines réceptrices avec une tension de référence Vref,
- un démodulateur pour démoduler le signal issu dudit sommateur,
- un intégrateur pour générer la tension continue axiale Va à partir du signal issu du démodulateur, et
- un multiplieur alimenté par la tension continue axiale Va et la tension de référence Vref de façon à générer ledit signal d'excitation; le déplacement relatif étant fonction de la valeur de Va pour laquelle la sortie dudit sommateur est nulle.

Autrement, toujours pour calculer la tension continue Va et pour réaliser par contre un asservissement sur les tensions générées, les moyens de calcul peuvent comprendre :

- un multiplieur-sommateur pour sommer une tension de référence Vref avec un signal de contre réaction multiplié par la somme va+vb des tensions générées par les bobines réceptrices,

- un démodulateur pour démoduler le signal issu dudit multiplieur, et
- un intégrateur pour générer la tension continue axiale Va à partir du signal issu du démodulateur, le signal de contre réaction étant la tension continue axiale Va; le déplacement relatif étant fonction de la valeur de la tension continue axiale Va pour laquelle la sortie dudit multiplieur est nulle.

En particulier, la tension de référence Vref peut être multipliée par un coefficient, kr pour le calcul de la tension continue radiale Vr, et ka pour le calcul de la tension continue axiale Va.

A titre d'exemple, les moyens de traitement comprennent un amplificateur sommateur apte à réaliser la somme va+vb de tensions générées par les bobines réceptrices, et un amplificateur différentiel apte à réaliser la différence va-vb de tensions générées par les bobines réceptrices.

A titre d'exemple non limitatif, on applique le procédé décrit ci-dessus pour le contrôle de position et de l'alignement des miroirs segmentés pour télescope.

Par cette application, le système décrit peut être appliqué pour la mesure de la position relative entre deux segments de miroirs adjacents. Des plaques respectivement émettrice et réceptrice peuvent être fixées à des parois latérales en vis à vis de deux segments de miroirs adjacents, à proximité étroite des surfaces actives desdits segments de miroirs. Le système de mesure sans contact est de préférence mis en oeuvre pour le contrôle de position (Tilt, Tip, piston et rayon de courbure global du miroir (GROC)) de segments de miroir, dans le domaine des télescopes de grande taille à miroirs segmentés notamment.

En complément, la fonction monotone, que l'on peut noter f(x) est donc de préférence une fonction inverse telle que $f(x)=1/x$, mais elle peut aussi être du type $f(x)=1/x^n$, ou toute autre forme plus ou moins complexe permettant d'obtenir un signal continue proportionnel au déplacement ou position axiale. La puissance "n" peut dépendre de plusieurs paramètres comme par exemple la taille et la forme des bobines et n'est pas forcément un entier.

D'une façon générale, le système selon l'invention peut être utilisé pour toute autre mesure sans contact compatible, en particulier pour une mesure sans contact de position et de déplacement uni-axe ou deux axes.

D'autres avantages et caractéristiques de l'invention apparaîtront à l'examen de la description détaillée d'un mode de mise en oeuvre nullement limitatif, et des dessins annexés, sur lesquels :

- La figure 1 est un schéma simplifié illustrant le principe de base du procédé selon la présente invention;
- La figure 2 est un schéma électronique de calcul analogique de déplacement axial avec un asservissement du signal d'excitation;
- La figure 3 est un schéma électronique d'un autre exemple de calcul analogique de déplacement axial sans asservissement du signal d'excitation;
- La figure 4 est un exemple de réalisation de contrôle ou de mesure de position radiale;
- La figure 5 est un exemple de réalisation préférentielle avec une bobine à l'émission et deux bobine à la réception;
- La figure 6 est un schéma simplifié d'un mode de réalisation comprenant deux bobines à l'émission et deux bobines à la réception;
- La figure 7 est une vue d'ensemble du système selon l'invention associé à des segments de miroirs pour télescope géant;
- La figure 8 est un schéma électronique d'un calcul analogique avec asservissement du signal d'excitation;
- La figure 9 est un schéma électronique d'un autre calcul analogique avec un signal d'excitation constant; et
- La figure 10 est un schéma simplifié illustrant le principe de calcul du multiplieur-sommateur utilisé sur les figures 8 et 9.

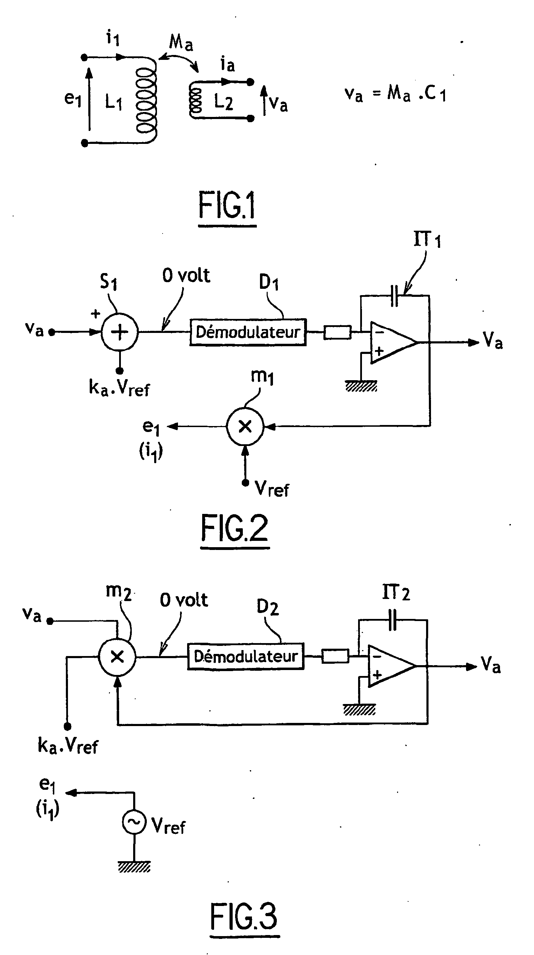

Sur la figure 1 on voit un premier mode de réalisation illustrant le principe de la présente invention qui est basé sur un transformateur sans noyau. Le primaire est constitué par la bobine L1 qui est l'émettrice alors que le secondaire est la bobine L2 en tant que réceptrice. L'ensemble constitue un capteur de bord utilisé et intégré dans un système selon la présente invention. En fait l'émettrice L1 est disposée sur un premier objet face à la réceptrice L2 disposée sur un second objet. La bobine émettrice L1 est excitée par une tension alternative e1 ou un courant alternatif i1 de façon à créer un champ magnétique. Par effet transformateur, il se crée une tension alternative va aux bornes de la bobine réceptrice L2 telle que :

Va = Ma.e1 avec Ma la mutuelle inductance entre les deux bobines L1 et L2. Sachant que la mutuelle inductance est inversement proportionnelle à l'écartement entre les deux bobines, on peut donc déterminer par calcul analogique notamment, le déplacement axial relatif des deux bobines. Ainsi, à partir de la tension alternative va aux bornes de la bobine réceptrice L2, on cherche à obtenir une tension continue Va du type :

Va = $\alpha$/Ma avec $\alpha$ un coefficient connu.

On utilise alors le dispositif de calcul analogique tel que décrit sur la figure 2. La tension alternative va alimente un sommateur S1. Ce dernier reçoit également une valeur ka.Vref où ka est un coefficient connu et Vref une tension de référence. La sortie du sommateur S1 alimente un démodulateur D1 qui est ensuite connecté, via une résistance, à un intégrateur IT1. La sortie du intégrateur IT1 est la tension continue Va. Cette sortie alimente un multiplieur m1 de façon à être multipliée par la tension de référence Vref et générer le signal d'excitation e1 (ou i1).

En particulier, l'entrée positive de cet intégrateur IT1 est reliée à la masse, ce qui contraint l'entrée négative à se maintenir à une tension nulle. Ainsi la sortie du sommateur S1 est également contraint à une tension nulle. Le dispositif aboutit aux équations suivantes :

    Sur S1 : Sortie S1 = 0 volt
    Sur S1 : va + ka.Vref = 0 volt
    Sur m1 : e1 = Va.Vref

Par conséquent, avec va = Ma.e1, on obtient :

$$Va.Vref.Ma + ka.Vref = 0$$

Soit :

$$Va = -ka/Ma$$

L'homme du métier comprendra aisément qu'il est possible de réaliser le processus à partir d'un courant ia généré en sortie.

Le dispositif ainsi décrit comporte un asservissement du signal d'excitation e1 par la tension continue axiale Va. Ce mode de réalisation peut présenter un inconvénient lorsqu'il y a plusieurs autres capteurs de bord à proximité. En effet, la modulation en amplitude du signal d'excitation e1 peut alors constituer un émetteur variable pour ces capteurs voisins et ainsi créer de la diaphonie. Pour réduire ce problème, on prévoit de maintenir l'excitation constante et de traiter uniquement les signaux à la réception. La figure 3 illustre ce second mode de réalisation dans lequel la tension alternative va alimente un multiplieur m2 qui reçoit également le signal ka.Vref ainsi que la tension continue Va. Ce multiplieur m2 réalise l'opération suivante :

$$va.Va + ka.Vref$$

La sortie du multiplieur m2 alimente un démodulateur D2 connecté à un intégrateur IT2 via une résistance de la même manière que sur la figure 2. La tension de sortie du IT2 est la tension continue axiale Va. Comme le IT2 impose une tension nulle aux bornes du démodulateur et donc à la sortie du multiplieur m2, on obtient :

$$va.Va + ka.Vref = 0$$

Par ailleurs, le signal d'excitation e1 (ou i1) est proportionnel à la tension de référence Vref,

Soit,

$$va = Ma.Vref$$

On obtient finalement :

$$(Ma.Vref).Va + ka.Vref = 0$$

soit,

$$Va = -ka/Ma$$

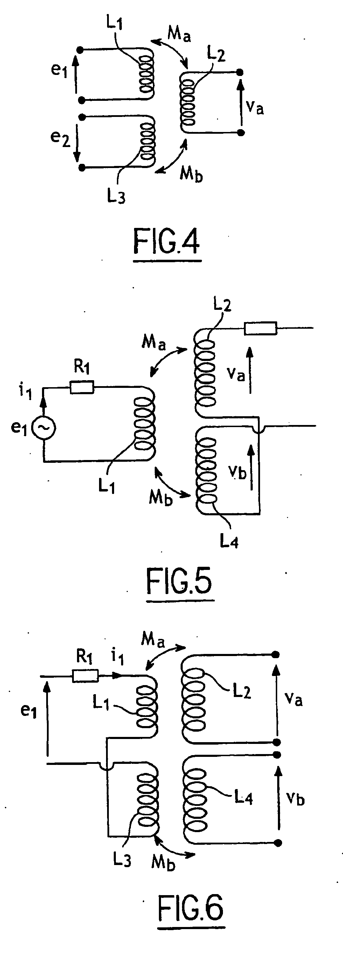

sur la figure 4, on voit un mode de réalisation dans lequel on souhaite réaliser du contrôle de position radiale. Pour ce faire, on utilise deux bobines L1 et L3 à l'émission, respectivement excitées par e1 et e2, et une bobine L2 à la réception générant va. La mutuelle inductance entre la bobine L1 et la bobine L2 est M1. La mutuelle inductance entre la bobine L3 et la bobine L2 est M2.

Les deux tensions d'excitation sont opposées, e1 est positive alors que e2 est négative.

Le dispositif fonctionne de la manière suivante. D'abord, pour une position donnée de L2, par exemple à égale distance des deux bobines L1 et L3, on ajuste e1 et e2 pour que va soit nulle. Pour une position axiale (écartement) constante notamment, il est alors possible de contrôler la position de la bobine réceptrice L2 par rapport à une plaque émettrice portant les deux bobines émettrices L1 et L3. Les calculs sont réalisés selon le même principe que sur les figures 2 et 3 avec :

$$va = M1.e1 - M2.e2$$

Sur la figure 5, on voit un autre mode de réalisation dans lequel on désire réaliser une mesure sans contact de déplacement ou de position axiale et radiale. Cette figure 5 illustre le principe de ce mode de réalisation alors que la figure 6 illustre une variante de réalisation préférée. Sur le principe, on dispose deux bobines réceptrices L2 et L4 générant deux tensions alternatives va et vb. va est proportionnelle à la mutuelle inductance Ma entre la bobine émettrice L1 et la bobine réceptrice L2. vb est proportionnelle à la mutuelle inductance Mb entre la bobine émettrice L1 et la bobine réceptrice L4. La bobine émettrice L1 est excitée par une tension alternative e1 ou un courant alternatif i1 via une résistance R1.

On sait que (va-vb)/(va+vb) est proportionnel à (Ma-Mb)/(Ma+Mb) qui est fonction de la distance radiale entre l'émetteur et le récepteur.

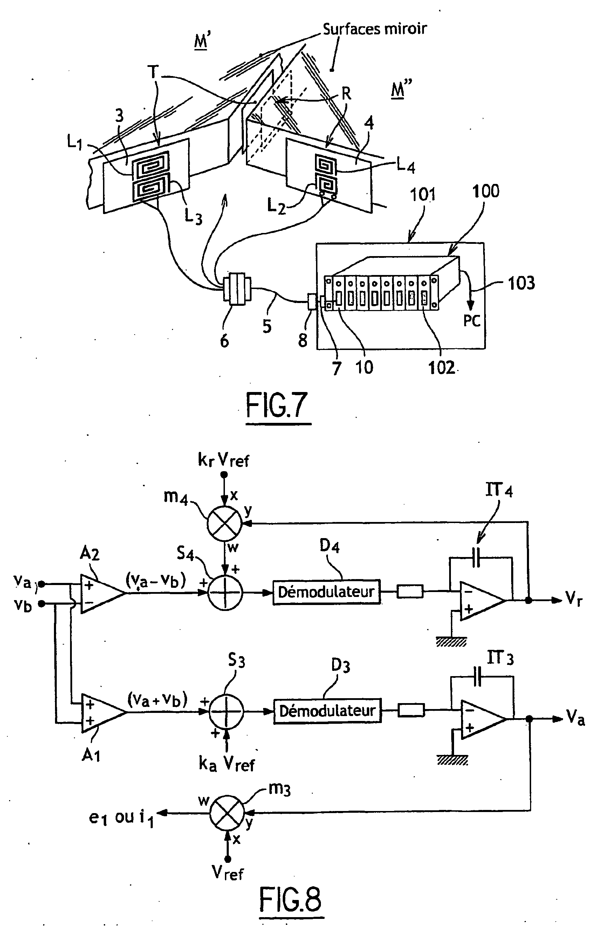

De préférence, comme on le voit sur la figure 6, on dispose plutôt deux bobines émettrices alignées L1 et L3, en sens opposé et alimentées par un courant alternatif i1 de façon à s'affranchir de la résistance R1. La résistance R1 sur les figures 5 et 6 est une résistance équivalente tenant compte notamment de câbles de liaison et/ou de la bobine d'excitation. Par ailleurs, la taille des bobines est optimisée en fonction des applications. Les bobines émettrices peuvent avantageusement être de taille supérieure à celle des bobines réceptrices comme on le voit sur la figure 7, ou inversement comme sur la figure 6 par exemple.

On va maintenant décrire, en référence à la figure 7, un exemple de réalisation d'un module capteur mis en oeuvre dans un système de mesure sans contact selon l'invention utilisé pour le contrôle d'un ensemble de miroirs segmentés. Ce module capteur, disposé entre deux segments de miroir M', M", comprend une plaque émettrice T fixée sur une paroi latérale 1 du segment M' et une plaque réceptrice R fixée sur une paroi latérale 2 du segment M", ces deux plaques respectivement émettrice et réceptrice T, R étant sensiblement en vis à vis et parallèles.

La plaque émettrice T comprend, sur un support plan 3 de faible épaisseur en matériau isolant, deux bobines émettrices L1 et L3 de forme carrée, rectangulaire circulaire ou autre alimentées par un même courant mais en sens opposé.

La plaque réceptrice R comprend, sur un support plan 4 de faible épaisseur en matériau isolant, deux bobines réceptrices L2 et L4 de forme carrée, rectangulaire circulaire ou autre.

A titre d'exemple non limitatif, les supports 3, 4 peuvent être en matériau stable dimensionnellement comme du zerodur®, ce qui permet d'obtenir la stabilité dimensionnelle requise.

Dans une mise en oeuvre particulière, les supports peuvent aussi être en matériau souple, comme le polyimide, collé sur le miroir. Le collage, avec une résine de faible épaisseur, permet de réduire très fortement le coefficient de dilatation thermique du capteur et d'améliorer la stabilité dimensionnelle du matériau souple supportant le capteur, grâce au faible coefficient de dilatation thermique du miroir. Le matériau souple peut, également être réalisé avec du circuit imprimé souple classique.

Comme les deux plaques T, R respectivement émettrice et réceptrice sont disposées parallèlement et écartées par une distance, en pratique de quelques mm à quelques cm, on obtient alors une première mutuelle inductance entre les bobines L1, L3 et la bobine L2, une seconde mutuelle inductance entre les bobines L1, L3 et la bobine L4.

Le module capteur est relié par un ou plusieurs câbles blindés 5 à un module de traitement électronique 10 installé dans un rack 100 qui peut contenir plusieurs modules de traitement électronique et disposé au sein d'un conteneur 101. Le câble blindé 5 est relié, d'une part, à des conducteurs électriques reliés au module capteur au moyen d'un premier connecteur 6 et d'autre part, au conteneur 101 au moyen d'un second connecteur 8 puis à l'équipement électronique 10 au moyen d'un troisième connecteur 7. Le rack 100 inclut aussi un module d'acquisition multi-canaux 102 connecté aux différents modules de traitement électronique 10 et à un bus de liaison extérieure 103.

L'agencement du module capteur entre deux segments de miroir permet une mesure de qualité car très proche des surfaces optiques. Par ailleurs, du fait du caractère distant des modules de traitement électronique, il n'y a pas de dissipation thermique au voisinage des segments de miroir.

Le calcul analogique fait intervenir la quantité 1/(Ma+Mb) qui est fonction de la distance axiale entre l'émetteur et le récepteur. Il fait également intervenir le calcul de la quantité (Ma-Mb)/(Ma+Mb) qui est fonction de la distance radiale entre l'émetteur et le récepteur.

Sur la figure 8, on voit un premier exemple d'implémentation dans lequel on distingue une première voie de calcul de la tension continue axiale Va et une seconde voie de calcul de la tension continue radiale Vr. Pour la première voie, les tensions alternatives va et vb alimentent un amplificateur sommateur A1 générant (va+vb). Le sommateur S3 reçoit en entrées les signaux (va+vb) et le signal ka.Vref. La sortie de S3 alimente un démodulateur D3 suivi d'un intégrateur IT3, générant la tension continue axiale Va, de la même manière que sur la figure 2. Le IT3, par son entrée positive reliée à la masse, impose une tension nulle à la sortie de S3 :

$$(va+vb) + ka.Vref = 0$$

Par ailleurs, La tension continue axiale Va alimente ou pilote un multiplieur m3 qui reçoit également le signal Vref de façon à générer la tension d'excitation e1 ou le courant d'excitation i1. Ainsi, avec e1.(Ma+Mb) = va + vb :

$$Vref.Va.(Ma+Mb) = va+vb$$

Soit, à partir de la sortie de S3 :

$$Vref.Va.(Ma+Mb) + ka.Vref = 0$$

Soit

$$Va = -ka/(Ma+Mb)$$

Va représente la distance axiale en maintenant constant la somme va+vb via le multiplieur.

Sur la seconde voie de calcul radial, on distingue un amplificateur différentiel A2 générant va-vb. Le sommateur S4 reçoit ce signal va-vb ainsi qu'un signal kr.Vref.Vr, où kr est un coefficient connu et Vr la tension continue radiale. La sortie du sommateur S4 alimente un démodulateur D4 suivi d'un intégrateur IT4, générant la tension continue radiale Vr. Le IT4, par son entrée positive reliée à la masse, impose une tension nulle à la sortie de S4 :

$$(va-vb) + kr.Vref.Vr = 0$$

Par ailleurs, sachant que e1.(Ma-Mb) = va-vb :

$$Vref.Va.(Ma-Mb) = va-vb$$

Soit, à partir de la sortie de S4 :

$$Vref.Va.(Ma-Mb) + kr.Vref.Vr = 0$$

Sachant que Va = -ka/(Ma+Mb), on obtient :

$$Vr = (ka/kr).(Ma-Mb)/(Ma+Mb)$$

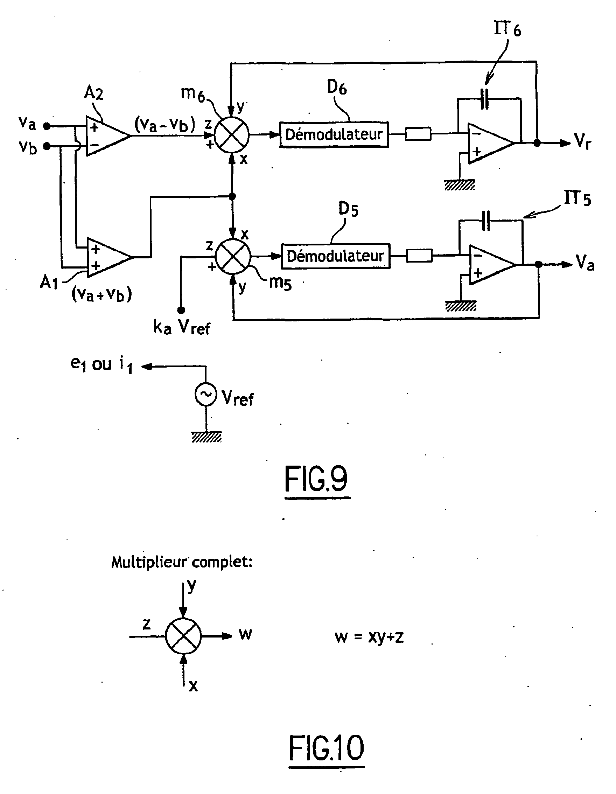

La figure 9 décrit un mode préféré de réalisation dans lequel le signal d'excitation e1 n'est plus asservi à la tension continue axiale Va, mais elle est maintenue constante et est égale à la tension de référence Vref.
La première voie axiale comporte un multiplieur-sommateur analogique effectuant l'opération suivante :

$$(va+vb).Va + ka.Vref$$

de la même manière que précédemment, la sortie de m5 alimente un démodulateur D5 suivi d'un intégrateur IT5, générant la tension continue axiale Va. Le multiplieur m5, comme les multiplieurs m3, m4 et m6 décrits sur les figures 8 et 9, est un multiplieur-sommateur fonctionnant de la manière illustrée sur la figure 10. Ce multiplieur comporte trois entrées X, Y représentées sur les entrées latérales, et Z représentée face à la sortie W. La sortie W est donnée par W=XY + Z. Ce multiplieur est de type analogique ou numérique.
Ensuite, sur la figure 9, le IT5, par son entrée positive reliée à la masse, impose une tension nulle à la sortie de S5 :

$$(va+vb).Va + ka.Vref = 0$$

avec Vref.(Ma+Mb) = va+vb, on obtient :

$$Va = -ka/(Ma+Mb)$$

La seconde voie radiale comporte un multiplieur analogique effectuant l'opération suivante :

$$Vr.(va+vb) + (va-vb)$$

de la même manière que précédemment, la sortie de m6 alimente un démodulateur D6 suivi d'un intégrateur IT6, générant la tension continue radiale Vr. Le IT6, par son entrée positive reliée à la masse, impose une tension nulle à la sortie de S6 :

$$Vr. (va+vb) + (va-vb) = 0$$

avec Vref.(Ma-Mb) = va-vb et Vref.(Ma+Mb) = va+vb, on obtient :

$$Vr = -(Ma-Mb)/(Ma+Mb)$$

Bien sûr, l'invention n'est pas limitée aux exemples qui viennent d'être décrits et de nombreux aménagements peuvent être apportés à ces exemples sans sortir du cadre de l'invention.

**Revendications**

1. Procédé de mesure sans contact d'un déplacement relatif ou d'un positionnement relatif d'un premier objet (M') par rapport à un second objet (M"), dans lequel :

   - on excite au moins une bobine émettrice (L1), placée sur le premier objet, par un signal d'excitation alternatif,
   - on utilise au moins deux bobines réceptrices (L2, L4) générant respectivement une tension alternative va proportionnelle à la mutuelle inductance Ma entre une première bobine réceptrice (L2) et ladite au moins une bobine émettrice (L1), et une tension alternative vb proportionnelle à la mutuelle inductance Mb entre une seconde bobine réceptrice (L4) et ladite au moins une bobine émettrice (L1),

   **caractérisé en ce qu'**on détermine :

   - un déplacement axial d'écartement entre le premier objet (M') et le second objet (M"), par mesure d'une tension continue axiale Va proportionnelle à une fonction monotone de la somme des mutuelles inductances Ma et Mb, et
   - un déplacement radial de désalignement entre le premier objet (M') et le second objet (M"), par mesure d'une tension continue radiale Vr proportionnelle à la relation (Ma-Mb).f(Ma+Mb);

(Ma-Mb) étant la différence des mutuelles inductances Ma et Mb, f(Ma+Mb) étant une fonction monotone de la somme (Ma+Mb) des mutuelles inductances Ma et Mb.

2. Procédé selon la revendication 1, **caractérisé en ce que** ladite au moins une bobine émettrice (L1) et lesdites bobines réceptrices (L2, L4) sont de type plates ou planaires, ladite au moins une bobine émettrice (L1) étant disposée face à ladite au moins une bobine réceptrice (L2).

3. Procédé selon la revendication 2, **caractérisé en ce que** ladite au moins une bobine émettrice (L1) et lesdites bobines réceptrices (L2, L4) sont sensiblement en vis-à-vis et parallèles.

4. Procédé selon la revendication 2 ou 3, **caractérisé en ce que** la surface globale présentée par les bobines émettrices est inférieure à la surface globale présentée par les bobines réceptrices.

5. Procédé selon l'une quelconque des revendications précédentes, **caractérisé en ce que** ladite au moins une bobine émettrice et lesdites bobine réceptrice constituent un transformateur.

6. Procédé selon l'une des revendications précédentes, **caractérisé en ce que** ladite fonction monotone consiste en une fonction inverse.

7. Procédé selon l'une des revendications précédentes, **caractérisé en ce que** l'amplitude du signal d'excitation de ladite au moins une bobine émettrice est asservie à la tension continue axiale Va.

8. Procédé selon l'une quelconque des revendications 1 à 5, **caractérisé en ce qu'**on maintient l'amplitude du signal d'excitation constante; et pour mesurer le déplacement relatif, des moyens de calcul de la tension continue Va sont asservis à cette tension continue axiale Va.

9. Procédé selon l'une quelconque des revendications précédentes, **caractérisé en ce qu'**on utilise deux bobines émettrices ; pour une position donnée des bobines, on détermine en sortie des bobines réceptrices une tension d'équilibrage d'inductance, et on asservit le positionnement radial des deux objets à ladite tension d'équilibrage.

10. Procédé selon la revendication 9, **caractérisé en ce que** la tension d'équilibrage est nulle.

11. Procédé selon la revendication 9 ou 10, **caractérisé en ce qu'**on excite les deux bobines par deux signaux d'excitation opposés.

12. Procédé selon l'une quelconque des revendications précédentes, **caractérisé en ce qu'**on utilise des bobines différentielles.

13. Procédé selon l'une quelconque des revendications précédentes, **caractérisé en ce que** les bobines présentent une forme rectangulaire, carrée ou circulaire.

14. Procédé selon l'une quelconque des revendications précédentes, **caractérisé en ce qu'**on réalise les bobines sous forme de spires déposées directement sur lesdits objets.

15. Procédé selon l'une quelconque des revendications 1 à 13, **caractérisé en ce qu'**on réalise les bobines sous forme de spires déposées sur des circuits flexibles, ces circuits flexibles étant disposés sur lesdits objets.

16. Procédé selon l'une quelconque des revendications précédentes, **caractérisé en ce que** les bobines sont déposées sur un matériau présentant un très faible coefficient dilatation thermique afin de réduire fortement la déformation de ces bobines déposées.

17. Procédé selon l'une quelconque des revendications précédentes, **caractérisé en ce que** ledit signal d'excitation alternatif est une tension alternative.

18. Procédé selon l'une quelconque des revendications 1 à 16, **caractérisé en ce que** ledit signal d'excitation alternatif est un courant alternatif.

19. Procédé selon l'une quelconque des revendications précédentes, **caractérisé en ce que** ledit signal électrique alternatif de sortie est une tension alternative.

20. Procédé selon l'une quelconque des revendications 1 à 18, **caractérisé en ce que** ledit signal électrique alternatif de sortie est un courant alternatif.

21. Procédé selon l'une quelconque des revendications précédentes, **caractérisé en ce que** les bobines émettrice et réceptrice sont respectivement disposées sur deux faces latérales adjacentes de deux miroirs d'un télescope.

22. Système de mesure de déplacement relatif ou d'un positionnement relatif d'un premier objet (M') par rapport à un second objet (M"), comprenant :

   - au moins une bobine émettrice (L1) placée sur ledit premier objet,
   - au moins deux bobines réceptrice (L2, L4) placée sur ledit second objet,
   - des moyens d'excitation de ladite au moins une bobine émettrice (L1) en signal d'excitation alternatif, et

- des moyens de traitement pour récupérer, respectivement, une tension alternative va proportionnelle à la mutuelle inductance Ma entre une première bobine réceptrice (L2) et ladite au moins une bobine émettrice (L1), et une tension alternative vb proportionnelle à la mutuelle inductance Mb entre une seconde bobine réceptrice (L4) et ladite au moins une bobine émettrice (L1),

**caractérisé en ce qu'**il comprend en outre :

- des moyens pour déterminer un déplacement axial d'écartement entre le premier objet (M') et le second objet (M''), par mesure d'une tension continue axiale Va proportionnelle à une fonction monotone de la somme des mutuelles inductances Ma et Mb, et
- des moyens pour déterminer un déplacement radial de désalignement entre le premier objet (M') et le second objet (M''), par mesure d'une tension continue radiale Vr proportionnelle à la relation (Ma-Mb).f(Ma+Mb); (Ma-Mb) étant la différence des mutuelles inductances Ma et Mb, f(Ma+Mb) étant une fonction monotone de la somme (Ma+Mb) des mutuelles inductances Ma et Mb.

23. Système selon la revendication 22, **caractérisé en ce que** ladite au moins une bobine émettrice (L1) et lesdites bobines réceptrices (L2, L4) sont de type plates ou planaires, ladite au moins une bobine émettrice (L1) étant disposée face à ladite au moins une bobine réceptrice (L2).

24. Système selon la revendication 22, **caractérisé en ce qu'**il comprend deux bobines émettrices alimentées par deux signaux d'excitation opposés de façon à réaliser du contrôle de positionnement radial.

25. Système selon la revendication 22, **caractérisé en ce qu'**il comprend deux bobines émettrices alimentées en série par un même courant alternatif.

26. Système selon l'une quelconque des revendications 22 à 25, **caractérisé en ce qu'**il comprend deux bobines réceptrices montées en série de façon à déterminer la somme des deux mutuelles inductances entre chaque bobine réceptrice et ladite au moins une bobine émettrice.

27. Système selon l'une quelconque des revendications 22 à 25, **caractérisé en ce qu'**il comprend deux bobines réceptrices montées en différentiel de façon à déterminer la différence des deux mutuelles inductances entre chaque bobine réceptrice et ladite au moins une bobine émettrice.

28. Système selon l'une des revendications 22 à 27, **caractérisé en ce que** les moyens de calcul comprennent :

    - un sommateur pour sommer la différence des tensions alternatives va-vb des deux bobines réceptrices avec un signal de contre-réaction,
    - un démodulateur pour démoduler le signal issu dudit sommateur,
    - un intégrateur pour générer la tension continue radiale Vr à partir du signal issu du démodulateur, et
    - un multiplieur alimenté par la tension continue radiale Vr et une tension de référence Vref pour générer ledit signal de contre-réaction; le déplacement relatif étant fonction de la valeur de la tension continue radiale Vr pour laquelle la sortie dudit multiplieur est nulle.

29. Système selon l'une des revendications 22 à 27, **caractérisé en ce que** les moyens de calcul comprennent :

    - un multiplieur-sommateur pour sommer la différence va-vb des tensions générées par les bobines réceptrices avec un signal de contre réaction multiplié par la somme va+vb des tensions générées par les bobines réceptrices,
    - un démodulateur pour démoduler le signal issu dudit multiplieur, et
    - un intégrateur pour générer la tension continue radiale Vr à partir du signal issu du démodulateur, ledit signal de contre réaction étant la tension continue radiale Vr; le déplacement relatif étant fonction de la valeur de la tension continue radiale Vr pour laquelle la sortie dudit multiplieur est nulle.

30. Système selon l'une des revendications 22 à 29, **caractérisé en ce que** ladite fonction monotone consiste en une fonction inverse.

31. Système selon la revendication 22, **caractérisé en ce que** les moyens de calcul comprennent :

    - un sommateur pour sommer la somme des tensions alternatives va+vb des deux bobines réceptrices avec une tension de référence Vref,
    - un démodulateur pour démoduler le signal issu dudit sommateur,
    - un intégrateur pour générer la tension continue axiale Va à partir du signal issu du démodulateur, et
    - un multiplieur alimenté par la tension continue axiale Va et la tension de référence Vref de façon à générer ledit signal d'excitation; le déplacement relatif étant fonction de la valeur de Va pour laquelle la sortie dudit sommateur est nulle.

**32.** Système selon la revendication 22, **caractérisé en ce que** les moyens de calcul comprennent :

- un multiplieur-sommateur pour sommer une tension de référence Vref avec un signal de contre réaction multiplié par la somme va+vb des tensions générées par les bobines réceptrices,
- un démodulateur pour démoduler le signal issu dudit multiplieur, et
- un intégrateur pour générer la tension continue axiale Va à partir du signal issu du démodulateur, le signal de contre réaction étant la tension continue axiale Va; le déplacement relatif étant fonction de la valeur de la tension continue axiale Va pour laquelle la sortie dudit multiplieur est nulle.

**33.** Système selon la revendication 28, 31 ou 32, **caractérisé en ce que**, pour tout calcul, la tension de référence Vref est multipliée par un coefficient (kr, ka).

**34.** Système selon l'une quelconque des revendications 22 à 33, **caractérisé en ce que** les moyens de traitement comprennent un amplificateur sommateur apte à réaliser la somme va+vb de tensions générées par les bobines réceptrices.

**35.** Système selon l'une quelconque des revendications 22 à 34, **caractérisé en ce que** les moyens de traitement comprennent un amplificateur différentiel apte à réaliser la différence va-vb de tensions générées par les bobines réceptrices.

**36.** Application du procédé selon l'une quelconque des revendications 1 à 21 pour le contrôle de position des miroirs segmentés pour télescope.

**37.** Application du procédé selon l'une quelconque des revendications 1 à 21 pour le contrôle de l'alignement des miroirs segmentés pour télescope.

**38.** Application du système de mesure sans contact selon l'une des revendications 22 à 35, pour la mesure de la position relative entre deux segments de miroirs adjacents.

**39.** Application selon la revendication 38, dans laquelle des plaques respectivement émettrice et réceptrice sont fixées à des parois latérales en vis à vis de deux segments de miroirs adjacents, à proximité étroite des surfaces actives desdits segments de miroirs.

**40.** Application selon la revendication 39, dans laquelle le système de mesure sans contact selon l'une des revendications 22 à 35 est mis en oeuvre pour le contrôle de position (Tilt, Tip, piston et rayon de courbure global du miroir (GROC)) de segments de miroir.

**41.** Application selon l'une des revendications 38 à 40, dans le domaine des télescopes de grande taille à miroirs segmentés.

**42.** Application du système de mesure sans contact selon l'une des revendications 22 à 35, pour la mesure sans contact de position et de déplacement uni-axe ou deux axes.

**Patentansprüche**

**1.** Verfahren zur kontaktlosen Messung einer Relativbewegung oder einer Relativpositionierung eines ersten Objektes (M') gegenüber einem zweiten Objekt (M''), wobei:

- wenigstens eine Sendespule (L1), die an dem ersten Objekt angeordnet ist, durch ein Erregungswechselsignal erregt wird,
- wenigstens zwei Empfangsspulen (L2, L4) verwendet werden, die eine Wechselspannung va, welche zu der Gegeninduktivität Ma zwischen einer ersten Empfangsspule (L2) und der wenigstens einen Sendespule (L1) proportional ist, bzw. eine Wechselspannung vb, welche zu der Gegeninduktivität Mb zwischen einer zweiten Empfangsspule (L4) und der wenigstens einen Sendespule (L1) proportional ist, erzeugen,

**dadurch gekennzeichnet, dass** man bestimmt:

- eine axiale Entfernungsbewegung zwischen dem ersten Objekt (M') und dem zweiten Objekt (M'') durch Messen einer axialen Gleichspannung Va, die zu einer monotonen Funktion der Summe der Gegeninduktivitäten Ma und Mb proportional ist, und
- eine radiale Versatzbewegung zwischen dem ersten Objekt (M') und dem zweiten Objekt (M'') durch Messen einer radialen Gleichspannung Vr, die zu der Beziehung (Ma-Mb).f(Ma+Mb) proportional ist, wobei (Ma-Mb) die Differenz der Gegeninduktivitäten Ma und Mb ist, wobei f(Ma+Mb) eine monotone Funktion der Summe (Ma+Mb) der Gegeninduktivitäten Ma und Mb ist.

**2.** Verfahren nach Anspruch 1, **dadurch gekennzeichnet, dass** die wenigstens eine Sendespule (L1) und die Empfangsspulen (L2, L4) vom flachen oder planaren Typ sind, wobei die wenigstens eine Sendespule (L1) gegenüber der wenigstens einen Empfangsspule (L2) angeordnet ist.

**3.** Verfahren nach Anspruch 2, **dadurch gekennzeichnet, dass** die wenigstens eine Sendespule (L1) und die Empfangsspulen (L2, L4) im Wesentlichen gegenüberliegend und parallel sind.

**4.** Verfahren nach Anspruch 2 oder 3, **dadurch gekennzeichnet, dass** die Gesamtfläche, welche die Sendespulen aufweisen, kleiner ist als die Gesamtfläche, welche die Empfangsspulen aufweisen.

**5.** Verfahren nach einem der vorhergehenden Ansprüche, **dadurch gekennzeichnet, dass** die wenigstens eine Sendespule und die Empfangsspulen einen Transformator bilden.

**6.** Verfahren nach einem der vorhergehenden Ansprüche, **dadurch gekennzeichnet, dass** die monotone Funktion aus einer inversen Funktion besteht.

**7.** Verfahren nach einem der vorhergehenden Ansprüche, **dadurch gekennzeichnet, dass** die Amplitude des Erregungssignals der wenigstens einen Sendespule von der axialen Gleichspannung Va abhängig ist.

**8.** Verfahren nach einem der Ansprüche 1 bis 5, **dadurch gekennzeichnet, dass** die Amplitude des Erregungssignals konstant gehalten wird und zur Messung der Relativbewegung Mittel zum Berechnen der Gleichspannung Va von dieser axialen Gleichspannung Va abhängig sind.

**9.** Verfahren nach einem der vorhergehenden Ansprüche, **dadurch gekennzeichnet, dass** zwei Sendespulen verwendet werden, für eine gegebene Position der Spulen am Ausgang der Empfangsspulen eine Induktivitätsausgleichsspannung bestimmt wird und die radiale Positionierung der beiden Objekte der Ausgleichsspannung unterworfen wird.

**10.** Verfahren nach Anspruch 9, **dadurch gekennzeichnet, dass** die Ausgleichsspannung null ist.

**11.** Verfahren nach Anspruch 9 oder 10, **dadurch gekennzeichnet, dass** die beiden Spulen durch zwei entgegengesetzte Erregungssignale erregt werden.

**12.** Verfahren nach einem der vorhergehenden Ansprüche, **dadurch gekennzeichnet, dass** Differentialspulen verwendet werden.

**13.** Verfahren nach einem der vorhergehenden Ansprüche, **dadurch gekennzeichnet, dass** die Spulen eine rechteckige, quadratische oder kreisförmige Form aufweisen.

**14.** Verfahren nach einem der vorhergehenden Ansprüche, **dadurch gekennzeichnet, dass** die Spulen in Form von direkt auf die Objekte aufgebrachten Windungen ausgebildet werden.

**15.** Verfahren nach einem der Ansprüche 1 bis 13, **dadurch gekennzeichnet, dass** die Spulen in Form von auf flexible Schaltungen aufgebrachten Windungen ausgebildet werden, wobei diese flexiblen Schaltungen auf den Objekten angeordnet sind.

**16.** Verfahren nach einem der vorhergehenden Ansprüche, **dadurch gekennzeichnet, dass** die Spulen auf ein Material aufgebracht sind, das einen sehr geringen Wärmeausdehnungskoeffizienten aufweist, um die Verformung dieser aufgebrachten Spulen stark zu reduzieren.

**17.** Verfahren nach einem der vorhergehenden Ansprüche, **dadurch gekennzeichnet, dass** das Erregungswechselsignal eine Wechselspannung ist.

**18.** Verfahren nach einem der Ansprüche 1 bis 16, **dadurch gekennzeichnet, dass** das Erregungswechselsignal ein Wechselstrom ist.

**19.** Verfahren nach einem der vorhergehenden Ansprüche, **dadurch gekennzeichnet, dass** das elektrische Ausgangswechselsignal eine Wechselspannung ist.

**20.** Verfahren nach einem der Ansprüche 1 bis 18, **dadurch gekennzeichnet, dass** das elektrische Ausgangswechselsignal ein Wechselstrom ist.

**21.** Verfahren nach einem der vorhergehenden Ansprüche, **dadurch gekennzeichnet, dass** die Sende- und die Empfangsspule jeweils auf zwei benachbarten Seitenflächen von zwei Spiegeln eines Teleskops angeordnet sind.

**22.** System zur Messung einer Relativbewegung oder einer Relativpositionierung eines ersten Objektes (M') gegenüber einem zweiten Objekt (M"), umfassend:

- wenigstens eine Sendespule (L1), die an dem ersten Objekt angeordnet ist,
- wenigstens zwei Empfangsspulen (L2, L4), die an dem zweiten Objekt angeordnet sind,
- Mittel zur Erregung der wenigstens einen Sendespule (L1) mit einem Erregungswechselsignal sowie
- Verarbeitungsmittel, um eine Wechselspannung va, welche zu der Gegeninduktivität Ma zwischen einer ersten Empfangsspule (L2) und der wenigstens einen Sendespule (L1) proportional ist, bzw. eine Wechselspannung vb, welche zu der Gegeninduktivität Mb zwischen einer zweiten Empfangsspule (L4) und der wenigstens einen Sendespule (L1) proportional ist, zu gewinnen,

**dadurch gekennzeichnet, dass** es ferner umfasst:

- Mittel zum Bestimmen einer axialen Entfernungsbewegung zwischen dem ersten Objekt (M') und dem zweiten Objekt (M") durch Messen einer axialen Gleichspannung Va, die zu einer monotonen Funktion der Summe der Gegeninduktivitäten Ma und Mb proportional ist, und
- Mittel zum Bestimmen einer radialen Versatzbewegung zwischen dem ersten Objekt (M') und dem zweiten Objekt (M") durch Messen einer radialen Gleichspannung Vr, die zu der Beziehung (Ma-Mb).f(Ma+Mb) proportional ist, wobei (Ma-Mb) die Differenz der Gegeninduktivitäten Ma und Mb ist, wobei f(Ma+Mb) eine monotone Funktion der Summe (Ma+Mb) der Gegeninduktivitäten Ma und Mb ist.

23. System nach Anspruch 22, **dadurch gekennzeichnet, dass** die wenigstens eine Sendespule (L1) und die Empfangsspulen (L2, L4) vom flachen oder planaren Typ sind, wobei die wenigstens eine Sendespule (L1) gegenüber der wenigstens einen Empfangsspule (L2) angeordnet ist.

24. System nach Anspruch 22, **dadurch gekennzeichnet, dass** es zwei Sendespulen umfasst, die mit zwei entgegengesetzten Erregungssignalen gespeist werden, um eine Kontrolle der radialen Positionierung durchzuführen.

25. System nach Anspruch 22, **dadurch gekennzeichnet, dass** es zwei Sendespulen umfasst, die in Reihe mit einem gleichen Wechselstrom gespeist werden.

26. System nach einem der Ansprüche 22 bis 25, **dadurch gekennzeichnet, dass** es zwei in Reihe geschaltete Empfangsspulen umfasst, um die Summe der beiden Gegeninduktivitäten zwischen jeder Empfangsspule und der wenigstens einen Sendespule zu bestimmen.

27. System nach einem der Ansprüche 22 bis 25, **dadurch gekennzeichnet, dass** es zwei differentiell geschaltete Empfangsspulen umfasst, um die Differenz der beiden Gegeninduktivitäten zwischen jeder Empfangsspule und der wenigstens einen Sendespule zu bestimmen.

28. System nach einem der Ansprüche 22 bis 27, **dadurch gekennzeichnet, dass** die Berechnungsmittel umfassen:

- einen Summierer, um die Differenz der Wechselspannungen va-vb der beiden Empfangsspulen mit einem Rückkopplungssignal zu summieren,
- einen Demodulator, um das von dem Summierer stammende Signal zu demodulieren,
- einen Integrierer, um die radiale Gleichspannung Vr anhand des von dem Demodulator stammenden Signals zu erzeugen, und
- einen Multiplikator, der mit der radialen Gleichspannung Vr und einer Referenzspannung Vref gespeist wird, um das Rückkopplungssignal zu erzeugen, wobei die Relativbewegung von dem Wert der radialen Gleichspannung Vr, bei der die Ausgabe des Multiplikators null ist, abhängig ist.

29. System nach einem der Ansprüche 22 bis 27, **dadurch gekennzeichnet, dass** die Berechnungsmittel umfassen:

- einen Multiplikator-Summierer, um die Differenz va-vb der durch die Empfangsspulen erzeugten Spannungen mit einem Rückkopplungssignal, das mit der Summe va+vb der durch die Empfangsspulen erzeugten Spannungen multipliziert wird, zu summieren,
- einen Demodulator, um das von dem Multiplikator stammende Signal zu demodulieren, und
- einen Integrierer, um die radiale Gleichspannung Vr anhand des von dem Demodulator stammenden Signals zu erzeugen, wobei das Rückkopplungssignal die radiale Gleichspannung Vr ist, wobei die Relativbewegung von dem Wert der radialen Gleichspannung Vr, bei der die Ausgabe des Multiplikators null ist, abhängig ist.

30. System nach einem der Ansprüche 22 bis 29, **dadurch gekennzeichnet, dass** die monotone Funktion aus einer inversen Funktion besteht.

31. System nach Anspruch 22, **dadurch gekennzeichnet, dass** die Berechnungsmittel umfassen:

- einen Summierer, um die Summe der Wechselspannungen va+vb der beiden Empfangsspulen mit einer Referenzspannung Vref zu summieren,
- einen Demodulator, um das von dem Summierer stammende Signal zu demodulieren,
- einen Integrierer, um die axiale Gleichspannung Va anhand des von dem Demodulator stammenden Signals zu erzeugen, und
- einen Multiplikator, der mit der axialen Gleichspannung Va und der Referenzspannung Vref gespeist wird, um das Erregungssignal zu erzeugen, wobei die Relativbewegung von dem Wert von Va, bei dem die Ausgabe des Summierers null ist, abhängig ist.

**32.** System nach Anspruch 22, **dadurch gekennzeichnet, dass** die Berechnungsmittel umfassen:

- einen Multiplikator-Summierer, um eine Referenzspannung Vref mit einem Rückkopplungssignal, das mit der Summe va+vb der durch die Empfangsspulen erzeugten Spannungen multipliziert wird, zu summieren,
- einen Demodulator, um das von dem Multiplikator stammende Signal zu demodulieren, und
- einen Integrierer, um die axiale Gleichspannung Va anhand des von dem Demodulator stammenden Signals zu erzeugen, wobei das Rückkopplungssignal die axiale Gleichspannung Va ist, wobei die Relativbewegung von dem Wert der axialen Gleichspannung Va, bei der die Ausgabe des Multiplikators null ist, abhängig ist.

**33.** System nach Anspruch 28, 31 oder 32, **dadurch gekennzeichnet, dass** für jede Berechnung die Referenzspannung Vref mit einem Koeffizienten (kr, ka) multipliziert wird.

**34.** System nach einem der Ansprüche 22 bis 33, **dadurch gekennzeichnet, dass** die Verarbeitungsmittel einen Summierverstärker umfassen, der geeignet ist, die Summe va+vb von durch die Empfangsspulen erzeugten Spannungen zu bilden.

**35.** System nach einem der Ansprüche 22 bis 34, **dadurch gekennzeichnet, dass** die Verarbeitungsmittel einen Differentialverstärker umfassen, der geeignet ist, die Differenz va-vb von durch die Empfangsspulen erzeugten Spannungen zu bilden.

**36.** Anwendung des Verfahrens nach einem der Ansprüche 1 bis 21, zur Positionskontrolle der segmentierten Spiegel für ein Teleskop.

**37.** Anwendung des Verfahrens nach einem der Ansprüche 1 bis 21, zur Kontrolle der Ausrichtung der segmentierten Spiegel für ein Teleskop.

**38.** Anwendung des kontaktlosen Messsystems nach einem der Ansprüche 22 bis 35, zur Messung der Relativposition zwischen zwei benachbarten Spiegelsegmenten.

**39.** Anwendung nach Anspruch 38, wobei eine Sende- bzw. eine Empfangsplatte an gegenüberüberliegenden Seitenwänden von zwei benachbarten Spiegelsegmenten, in enger Nähe der aktiven Flächen der Spiegelsegmente befestigt sind.

**40.** Anwendung nach Anspruch 39, wobei das kontaktlose Messsystem nach einem der Ansprüche 22 bis 35 für die Positionskontrolle (Tilt, Tip, Kolben und Gesamtkrümmungsradius des Spiegels (GROC)) von Spiegelsegmenten eingesetzt wird.

**41.** Anwendung nach einem der Ansprüche 38 bis 40, auf dem Gebiet von großen Teleskopen mit segmentierten Spiegeln.

**42.** Anwendung des kontaktlosen Messsystems nach einem der Ansprüche 22 bis 35, für die kontaktlose Positions- und ein- oder zweiachsige Bewegungsmessung.

**Claims**

**1.** Non-contact measurement method for a relative displacement or relative positioning of a first object (M') relative to a second object (M"), in which:

- at least one transmitting coil (L1), placed on the first object, is excited by an alternating excitation signal,
- at least two receiving coils (L2, L4) are used which generate, respectively, an alternating voltage va that is proportional to mutual inductance Ma between a first receiving coil (L2) and said at least one transmitting coil (L1), and an alternating voltage vb that is proportional to the mutual inductance Mb between a second receiving coil (L4) and said at least one transmitting coil (L1),

**characterized in that** :

- an axial displacement of distance between the first object (M') and the second object (M") is determined by measuring a continuous axial voltage Va that is proportional to a monotone function of the sum of the mutual inductances Ma and Mb, and
- a radial displacement of misalignment between the first object (M') and the second object (M") is determined by measuring a continuous radial voltage Vr proportional to the relation (Ma-Mb). f(Ma + Mb); where (Ma-Mb) is the difference between mutual inductances Ma and Mb, where f(Ma + Mb) is a monotone function of the sum (Ma + Mb) of mutual inductances Ma and Mb.

**2.** Method according to claim 1, **characterized in that** said at least one transmitting coil (L1) and said at least two receiving coils (L2, L4) are of a flat or planar type, said at least one transmitting coil (L1) being arranged facing said at least one receiving coil (L2).

**3.** Method according to claim 2, **characterized in that** said at least one transmitting coil (L1) and said at least two receiving coils (L2, L4) are largely facing each other and parallel.

4. Method according to claim 2 or 3, **characterized in that** the overall surface presented by the transmitting coils is less than the overall surface presented by the receiving coils.

5. Method according to any of the preceding claims, **characterized in that** said at least one transmitting coil and said receiving coils constitute a transformer.

6. Method according to any of the preceding claims, **characterized in that** said monotone function consists of an inverse function.

7. Method according to any of the preceding claims, **characterized in that** the amplitude of the excitation signal of said at least one transmitting coil is triggered by continuous axial voltage Va.

8. Method according to any one of claims 1 to 5, **characterized in that** the amplitude of the excitation signal is held constant; and to measure the relative displacement, means of calculating continuous voltage Va is triggered by this continuous axial voltage Va.

9. Method according to any of the preceding claims, **characterized in that** two transmitting coils are used; for a given coil position, an inductance equilibrium voltage is determined at the output of the receiving coils, and the radial position of the two objects is triggered by said equilibrium voltage.

10. Method according to claim 9, **characterized in that** the equilibrium voltage is null.

11. Method according to claim 9 or 10, **characterized in that** the two coils are excited by two opposite excitation signals.

12. Method according to any of the preceding claims, **characterized in that** differential coils are used.

13. Method according to any of the preceding claims, **characterized in that** the coils are rectangular, square or circular in shape.

14. Method according to any of the preceding claims, **characterized in that** the coils are made in the shape of loops arranged directly on said objects.

15. Method according to any of claims 1 to 13, **characterized in that** the coils are made in the shape of loops arranged on flexible circuits, where these flexible circuits are arranged on said objects.

16. Method according to any of the preceding claims, **characterized in that** the coils are arranged on a material with a very low thermal expansion coefficient in order to greatly reduce the deformation of these arranged coils.

17. Method according to any of the preceding claims, **characterized in that** said alternating excitation signal is an alternating voltage.

18. Method according to any of claims 1 to 16, **characterized in that** said alternating excitation signal is an alternating current.

19. Method according to any of the preceding claims, **characterized in that** said alternating electric output signal is an alternating voltage.

20. Method according to any of claims 1 to 18, **characterized in that** said alternating electric output signal is an alternating current.

21. Method according to any of the preceding claims, **characterized in that** the transmitting and receiving coils are, respectively, arranged on two adjacent lateral sides of two mirrors of a telescope.

22. System for measuring relative displacement or relative positioning of a first object (M') relative to a second object (M"), comprising:

    - at least one transmitting coil (L1) placed on said first object,
    - at least two receiving coils (L2, L4) placed on said second object,
    - means of excitation for said at least one transmitting coil (L1) into an alternating excitation signal, and
    - means of processing for recovering, respectively, an alternating voltage va that is proportional to mutual inductance Ma between a first receiving coil (L2) and said at least one transmitting coil (L1), and an alternating voltage vb that is proportional to the mutual inductance Mb between a second receiving coil (L4) and said at least one transmitting coil (L1),

**characterized in that** it comprises further:

    - means for determining an axial displacement of distance between the first object (M') and the second object (M"), by measuring a continuous axial voltage Va that is proportional to a monotone function of the sum of the mutual inductances Ma and Mb, and
    - means for determining a radial displacement of misalignment between the first object (M') and the second object (M"), by measuring a continuous radial voltage Vr proportional to the relation (Ma-Mb).f(Ma + Mb); where (Ma-Mb) is the difference between mutual inductances Ma and Mb, where f(Ma + Mb) is a monotone function of the sum (Ma + Mb) of mutual inductances Ma and Mb.

23. System according to claim 22, **characterized in that** said at least one transmitting coil (L1) and said at least two receiving coils (L2, L4) are of a flat or planar type, said at least one transmitting coil (L1) being arranged facing said at least one receiving coil (L2).

24. System according to claim 22, **characterized in that** it comprises two transmitting coils powered by two opposite excitation signals to control radial positioning.

25. System according to claim 22, **characterized in that** it comprises two transmitting coils powered in series by the same alternating current.

26. System according to any of claims 22 to 25, **characterized in that** it comprises two receiving coils mounted in series so as to determine the sum of the two mutual inductances between each receiving coil and said at least one transmitting coil.

27. System according to any of claims 22 to 25, **characterized in that** it comprises two receiving coils mounted in a differential way so as to determine the difference of the two mutual inductances between each receiving coil and said at least one transmitting coil.

28. System according to any of claims 22 to 27, **characterized in that** the means of calculation comprise:

   - an adder for adding the difference in alternating voltages va-vb of two receiving coils with a feedback signal,
   - a demodulator for demodulating the signal emitted from said adder,
   - an integrator for generating the continuous radial voltage Vr using the signal generated by the demodulator, and
   - a multiplier powered by continuous radial voltage Vr and a reference voltage Vref for generating said feedback signal; where the relative displacement is a function of the value of the continuous radial voltage Vr for which the output of said multiplier is null.

29. System according to any of claims 22 to 27, **characterized in that** the calculation means comprise:

   - a multiplier-adder for adding the difference va-vb in the voltages generated by the receiving coils with a feedback signal multiplied by the sum va+vb of the voltages generated by the receiving coils,
   - a demodulator for demodulating the signal emitted by said multiplier, and
   - an integrator for generating the continuous radial voltage Vr using the signal emitted by the demodulator, where said feedback signal is the continuous radial voltage Vr; where the relative displacement is function of the value of the continuous radial voltage Vr for which the output of said multiplier is null.

30. System according to any of claims 22 to 29, **characterized in that** said monotone function comprises an inverse function.

31. System according to claim 22, **characterized in that** the means of calculation comprise:

   - an adder for adding the sum of alternating voltages va+vb of two receiving coils with a reference voltage Vref,
   - a demodulator for demodulating the signal emitted by said adder,
   - an integrator for generating continuous the axial voltage Va using the signal emitted by the demodulator, and
   - a multiplier that is powered by the continuous axial voltage Va and the reference voltage Vref so that said excitation signal is generated; where the relative motion is a function of the value of Va for which the output of said adder is null.

32. System according to claim 22, **characterized in that** the means of calculation comprise:

   - a multiplier adder for adding a reference voltage Vref to a feedback signal multiplied by the sum va+vb of voltages generated by receiving coils,
   - a demodulator for demodulating the signal emitted by said multiplier, and
   - an integrator for generating the continuous axial voltage Va using the signal emitted by the demodulator, where the feedback signal is the continuous axial voltage Va; and where the relative displacement is a function of the value of the continuous axial voltage Va for which the output of said multiplier is null.

33. System according to claim 28, 31 or 32, **characterized in that**, for all calculations, the reference voltage Vref is multiplied by a coefficient (kr, ka).

34. System according to any of claims 22 to 33, **characterized in that** the processing means comprise an adding amplifier designed to produce the sum va+vb of the voltages generated by the receiving coils.

35. System according to any of claims 22 to 34, **characterized in that** the processing method comprise a differential amplifier designed to produce the difference va-vb of voltages generated by the receiving coils.

36. Application of the method according to any of claims 1 to 21 for controlling the position of the segmented telescope mirrors.

37. Application of the method according to any of claims 1 to 21 for controlling the alignment of the segmented telescope mirrors.

38. Application of the non-contact measuring system according to any one of claims 22 to 35, for measuring the relative position between two adjacent mirror segments.

39. Application according to claim 38, in which plates that are respectively transmitter and receiver are attached to lateral walls facing two adjacent mirror segments, in close proximity to the active surfaces of said mirror segments.

40. Application according to claim 39, in which the non-contact measurement system according to any one of claims 22 to 35 is implemented for controlling the position (Tilt, Tip, piston and global radius of curvature(GROC) of the mirror) of the mirror's segments.

41. Application according to any one of claims 38 to 40, in the sector of large-size, segmented-mirror telescopes.

42. Application of the non-contact measurement system according to any one of claims 22 to 35, for non-contact measurement of position and displacement in one or two axes.

$$v_a = M_a \cdot C_1$$

## FIG.1

$e_1$ (i$_1$)

$k_a \cdot V_{ref}$

$V_{ref}$

## FIG.2

$k_a \cdot V_{ref}$

$e_1$ (i$_1$)

$V_{ref}$

## FIG.3

## FIG.4

## FIG.5

## FIG.6

FIG.7

FIG.8

## FIG.9

Multiplieur complet:

$$w = xy + z$$

## FIG.10

**EP 1 904 806 B2**

## RÉFÉRENCES CITÉES DANS LA DESCRIPTION

**Documents brevets cités dans la description**

- WO 2004020953 A
- US 4816759 A
- US 20040075428 A
- FR 1512207
- DE 199118404

**Littérature non-brevet citée dans la description**

- **TERRY S.MAST ; JERRY E.NELSON.** Segmented Mirror Control System Hardware for CELT. *SPIE,* 2000